# EUROPÄISCHE PATENTSCHRIFT

(11) **EP 3 216 341 B1**
(45) Veröffentlichungstag und Bekanntmachung des Hinweises auf die Patenterteilung: **12.12.2018**
(21) Anmeldenummer: 16204559.5
(22) Anmeldetag: 16.12.2016
(51) Int. Cl.: A01F 15/07

(54) **BALLENPRESSE**
BALING PRESS
PRESSE À EMPAQUETER

(30) Priorität: 08.03.2016 DE 102016104164
(43) Veröffentlichungstag der Anmeldung: 13.09.2017
(73) Patentinhaber: Usines Claas France S.A.S, 57140 St. Rémy / Woippy (FR)
(72) Erfinder: Batancourt, Grégory, 57130 Vionville (FR); Bare, Florent, 55150 Azannes et Soumazannes (FR); Gardien, Johnny, 57160 Moulins les Metz (FR)
(74) Vertreter: Budach, Steffen

(56) Entgegenhaltungen:
- EP-A1- 0 864 251
- EP-A1- 1 787 505
- EP-A2- 2 767 153
- DE-A1- 4 308 646

## Beschreibung

Die Erfindung betrifft eine Ballenpresse mit einer Zuführeinheit für Wickelmaterial gemäß dem Oberbegriff des Anspruches 1.

Ballenpressen, insbesondere Rundballenpressen, werden üblicherweise von einem Zugfahrzeug, beispielsweise einem Traktor, zur Aufnahme von in Form eines Schwads abgelegten Ernteguts über ein Feld gezogen. Zum Pressen von Ballen aus dem aufgenommenen Erntegut weisen Ballenpressen eine Presskammer auf, sowie oftmals eine der Pressvorrichtung nachgeordnete Wickelvorrichtung zum Umhüllen der gepressten Ballen mit einem bahnförmigen Wickelmaterial. Das von der Ballenpresse aufgenommene Erntegut wird in die Presskammer geleitet und dort zu einem Ballen geformt und verdichtet. Bei einer Rundballenpresse kann die Presskammer einen festen Durchmesser aufweisen oder in Form einer Presskammer mit variablem Durchmesser ausgebildet sein. Eine Festkammerpresse mit einer Presskammer mit festem Durchmesser weist dabei entlang ihres Umfanges feststehende Presswalzen auf. Bei einer Ballenpresse mit einer Presskammer mit einem variablen Durchmesser wird die Presskammer durch einen oder mehrere endlos um teilweise verstellbare Rollen umlaufende Pressriemen ausgebildet.

Ein fertig gepresster Rundballen wird üblicherweise vor einem Auswerfen aus der Presskammer in dieser mit einem Wickelmaterial, beispielsweise Garn oder einem Netz, umhüllt, um den Ballen zu stabilisieren und ein Auseinanderfallen zu vermeiden. Das Wickelmaterial kann dabei, beispielsweise bei einer Festkammerpresse, durch einen aus zwei benachbarten Presselementen gebildeten Einführspalt mittels einer Zuführeinheit in den Pressraum zugeführt werden. Bei einer Ballenpresse mit einer variablen Presskammer steht für die Zufuhr des Wickelmaterials aus technischen Gründen nur der Bereich zur Verfügung, in dem das Erntegut in die Presskammer zugeführt wird. Bei beiden Presskammerarten kommt es durch während des Pressens aufgewirbeltes Erntegut und Staub zu Ablagerungen und Materialansammlungen im Bereich der Zuführeinheit, wodurch es zu einer Störung der Funktion der Zuführeinheit und zu einer Beschädigung des Wickelmaterials kommen kann.

Aus der EP 2 767 153 A2 ist eine Rundballenpresse bekannt, deren Pressraum umfangsseitig durch umlaufende Presselemente gebildet wird, wobei wenigstens eine ein Vorzugswalzenpaar aufweisenden Umhüllvorrichtung zum Umhüllen eines Rundballens mit Umhüllmaterial vorgesehen ist. Das Umhüllmaterial ist dabei mittels eines antreibbaren Zuführelementes durch einen Einführspalt im Pressraum in diesen einführbar. Um nun eine Materialansammlung im Bereich dieser Umhüllvorrichtung zu vermeiden, ist vorgesehen, dass von mindestens einem Zuführelement in Form einer Förderwalze oder eines Förderbandes die Drehrichtung umgekehrt werden kann, wobei durch die umkehrbare Drehrichtung der Selbstreinigungseffekt der Umhüllvorrichtung unterstützt wird. Nachteilig ist hierbei jedoch der aufwändige Aufbau des Systems mit einer Vielzahl an Zuführelementen. Zudem ist ein entsprechend umsteuerbarer Antrieb für das mindestens eine Zuführelement notwendig.

Aus dem Dokument DE 43 08 646 A1 ist eine Ballenpresse nach dem Oberbegriff des Anspruchs 1 bekannt.

Es ist daher eine Aufgabe der Erfindung, eine Rundballenpresse bereitzustellen, bei der mit einfachen Mitteln eine Beschädigung des Wickelmaterials vermieden und die Funktionssicherheit einer Zuführeinheit für das Wickelmaterial erhöht werden kann. Diese Aufgabe wird erfindungsgemäß durch eine Ballenpresse mit den Merkmalen des Anspruches 1 gelöst. Vorteilhafte Ausgestaltungen sind in den abhängigen Ansprüchen wiedergegeben, welche jeweils für sich genommen oder in Kombination miteinander einen Aspekt der Erfindung darstellen können.

Eine Ballenpresse, umfassend eine Presskammer zum Pressen von Rundballen aus Erntegut, mindestens eine an eine Drehbewegung des Rundballens gekoppelte erste Rolle, und eine der Presskammer zugeordnete Zuführeinheit zum Zuführen eines Wickelmaterials in die Presskammer, wobei das Wickelmaterial durch einen an die erste Rolle angrenzenden Zuführspalt in die Presskammer zuführbar ist, und wobei die Zuführeinheit mindestens eine erste Leitvorrichtung aufweist. Gemäß der Erfindung ist die erste Leitvorrichtung außenseitig der Presskammer an dem Zuführspalt angeordnet und in eine Zuführposition und/oder eine geöffnete Position verlagerbar, und die Zuführeinheit weist eine zweite Leitvorrichtung auf, welche presskammerseitig der ersten Leitvorrichtung derart angeordnet ist, dass zumindest in der geöffneten Position zwischen der ersten und der zweiten Leitvorrichtung ein Reinigungsspalt ausgebildet ist. In der geöffneten Position ist die erste Leitvorrichtung beabstandet zu der ersten Rolle angeordnet, wobei ein Wickelmaterial rollenseitig an der ersten Leitvorrichtung anliegen kann. Bei einem Verlagern der ersten Leitvorrichtung in die Zuführposition kommt diese zumindest teilweise umfangsseitig mit der ersten Rolle oder einem außenseitig an der Rolle anliegenden Pressriemen in Kontakt. Hierdurch ist das Wickelmaterial kraftschlüssig zwischen der ersten Leitvorrichtung und der Rolle andrückbar, so dass das Wickelmaterial von der ersten Rolle mitgezogen und entlang der zweiten Leitvorrichtung durch den Zuführspalt in die Presskammer zugeführt wird.

Der Reinigungsspalt zwischen der ersten und zweiten Leitvorrichtung ermöglicht dabei ein, zumindest in der geöffneten Position der ersten Leitvorrichtung, kontinuierliches Abführen von Material an die Umgebung, welches im Bereich der Zuführeinheit und/oder der ersten Rolle anfällt. Hierdurch können unerwünschte Materialansammlungen und Verschmutzungen, beispielsweise Steine, im Bereich der Zuführeinheit und/oder der ersten Rolle vermeiden werden. Dies hat den Vorteil, dass mit einfachen Mitteln eine Beschädigung des Wickelmaterials vermieden werden und eine Funktionssicherheit der Zuführeinheit für das Wickelmaterial erhöht werden kann. Zudem kann so ein erhöhter Verschleiß der Zuführeinheit, insbesondere der ersten Leitvorrichtung, durch Materialansammlungen und/oder Verschmutzung vermieden und damit die Standzeit der Zuführeinrichtung erhöht werden.

In einer bevorzugten Ausgestaltung der Erfindung ist der Reinigungsspalt zwischen der ersten Leitvorrichtung und der zweiten Leitvorrichtung im Wesentlichen in einem, insbesondere presskammerseitigen, Bereich einer Lotrechten der Drehachse der ersten Rolle ausgebildet. Die Lotrechte weist, bei waagerecht stehender Ballenpresse, senkrecht nach unten in Richtung der Wirkrichtung der Schwerkraft. Unter im Wesentlichen ist hierbei eine Anordnung eines überwiegenden Anteils der Fläche des Reinigungsspaltes in dem Bereich der Lotrechten zu verstehen. Dies hat den Vorteil, dass Material, welches in der Zuführeinheit anfällt und/oder durch die Rotation der ersten Rolle in den Bereich der Leitvorrichtungen geleitet wird, insbesondere in der geöffneten Position und/oder der Zuführposition, unter Wirkung der Schwerkraft durch den Reinigungsspalt aus der Zuführeinheit abgeleitet werden kann. Ein presskammerseitig der Lotrechten angeordneter Reinigungsspalt ermöglicht eine verbesserte Ableitung von unerwünschtem Material aus der Zuführeinheit bei drehender erster Rolle, da sich hierbei besonders von der ersten Rolle mitgerissenes Material in tangentialer Richtung von dieser löst und so besser durch den Reinigungsspalt abgeführt werden kann.

In einer besonders bevorzugten Ausgestaltung der Erfindung ist in der geöffneten Position und/oder der Zuführposition der Reinigungsspalt durch einen tangentialen Abstand und/oder einen radialen Abstand der ersten und zweiten Leitvorrichtung zueinander ausgebildet. Die Ausbildung des Reinigungsspaltes durch einen tangentialen Abstand zwischen der ersten und zweiten Leitvorrichtung bietet den Vorteil, dass an der ersten und/oder zweiten Leitvorrichtung innenseitig anfallendes Material durch den Reinigungsspalt zuverlässig abgeleitet werden kann. Ein in radialer Richtung ausgebildeter Reinigungsspalt, beispielsweise durch eine Anordnung der ersten Leitvorrichtung radial außenseitig der zweiten Leitvorrichtung, weist zudem den Vorteil auf, dass von der drehenden Rolle mitgerissenes Material von der ersten Leitvorrichtung durch den Reinigungsspalt auf eine Außenseite der zweiten Leitvorrichtung lenkbar und somit zuverlässig abscheidbar ist.

In einer weiteren bevorzugten Ausgestaltung der Erfindung ist vorgesehen, dass in der Zuführposition die erste Leitvorrichtung und die zweite Leitvorrichtung zumindest teilweise in tangentialer Richtung überlappend angeordnet sind. Eine tangentiale Überlappung, also in tangentialer Richtung am Umfang der Rolle und/oder eines daran radial außenseitig anliegenden Riemens betrachtet, ermöglicht eine zuverlässige Überleitung des Wickelmaterial von der ersten Leitvorrichtung auf die zweite Leitvorrichtung, wodurch die Funktionssicherheit der Zuführeinheit erhöht werden kann.

Vorzugsweise ist die erste Leitvorrichtung durch ein Verschwenken um eine Schwenkachse in die Zuführposition und/oder geöffnete Position verlagerbar. Die erste Leitvorrichtung kann hierfür an einem Schwenkprofil angeordnet sein, welches durch einen Aktor um die Schwenkachse verschwenkbar ist. Die Schwenkachse kann an einem der zweiten Leitvorrichtung abgewandten Ende der ersten Leitvorrichtung angeordnet sein. Durch das Verschwenken der ersten Leitvorrichtung kann mit einfachen Mitteln eine, insbesondere einstellbare, Ausbildung des Reinigungsspaltes in tangentialer und/oder radialer Richtung bewirkt werden.

In vorteilhafter Weiterbildung der Erfindung weist die erste Leitvorrichtung rollenseitig mindestens einen Kontaktbereich auf, welcher zum Kontaktieren der ersten Rolle und/oder zum Anpressen des Wickelmaterials gegen die erste Rolle in der Zuführposition ausgebildet ist. Durch den mindestens einen Kontaktbereich, welcher beispielsweise linienförmig parallel oder senkrecht zur Drehachse der ersten Rolle ausgebildet sein kann, ist ein zuverlässiges Anpressen des Wickelmaterials an die erste Rolle in einer definierten Position möglich, wodurch ein zuverlässiges Mitnehmen und Zuführen des Wickelmaterials durch die erste Rolle ermöglicht werden kann. Zudem kann durch die Ausbildung mindestens eines Kontaktbereiches der Verschleiß der ersten Leitvorrichtung verringert werden, wodurch die Standzeit der Zuführeinheit erhöht werden kann.

In einer bevorzugten Ausgestaltung der Erfindung sind die erste Leitvorrichtung und die zweite Leitvorrichtung entlang eines Teilumfangs der ersten Rolle angeordnet, wobei erste Leitvorrichtung in Form eines im Wesentlichen flächigen Bauteils ausgebildet ist, welches zumindest in einem Teilbereich dem Formverlauf der ersten Rolle angepasst ist. Durch die flächige Ausgestaltung der ersten Leitvorrichtung, beispielsweise in Form eines gebogenen Bleches, und deren zumindest teilweise Anpassung an den Formverlauf der ersten Rolle, insbesondere deren radial außenseitigen Krümmungsradius, kann eine zuverlässige, bauraumsparende und kostengünstige Ausgestaltung ermöglicht werden.

Weiterhin bevorzugt ist die zweite Leitvorrichtung zumindest teilweise innerhalb des Zuführspaltes angeordnet. Die zweite Leitvorrichtung kann dabei relativ zur Rolle festgelegt oder verlagerbar ausgebildet sein. Die zweite Leitvorrichtung kann in ein Bauteil der Ballenpresse, beispielsweise ein Gehäuse oder einen Rotorabstreifer, integriert sein, und beispielsweise einstückig mit diesem ausgebildet sein. Ebenso ist denkbar, die zweite Leitvorrichtung in Form eines flächigen Bauteils, beispielsweise als Blech, auszugestalten. Durch die teilweise Anordnung der zweiten Leitvorrichtung in dem Zuführspalt kann eine zuverlässige Zuführung des Wickelmaterials in die Presskammer zum Umwickeln des Ballens gewährleistet werden.

In einer bevorzugten Ausgestaltung der Erfindung weist die zweite Leitvorrichtung an einem der ersten Leitvorrichtung zugewandten Ende eine Ablenkkante auf. Die Ablenkkante kann in Form eines endseitigen, nach radial außen gerichteten Abkantung der zweiten Leitvorrichtung ausgebildet sein. Durch die Ablenkkante kann ein unerwünschtes austreten des Wickelmaterials durch den Reinigungsspalt vermieden werden, wodurch die Funktionssicherheit der Zuführeinheit erhöht werden kann. Weitere Merkmale der Erfindung ergeben sich aus der nachfolgenden Beschreibung sowie aus den Zeichnungen, in denen ein Ausführungsbeispiel der Erfindung dargestellt und beschrieben ist.

Es zeigen:
- Fig. 1:: eine schematische Seitenansicht einer Ballenpresse;
- Fig. 2:: eine detaillierte Seitenansicht einer Zuführeinheit mit einer ersten Leitvorrichtung in einer geöffneten Position;
- Fig. 3:: eine detaillierte Seitenansicht einer Zuführeinheit mit einer ersten Leitvorrichtung in einer Zuführposition; und
- Fig. 4:: eine perspektivische Darstellung der ersten Leitvorrichtung der Zuführeinheit der Ballenpresse.

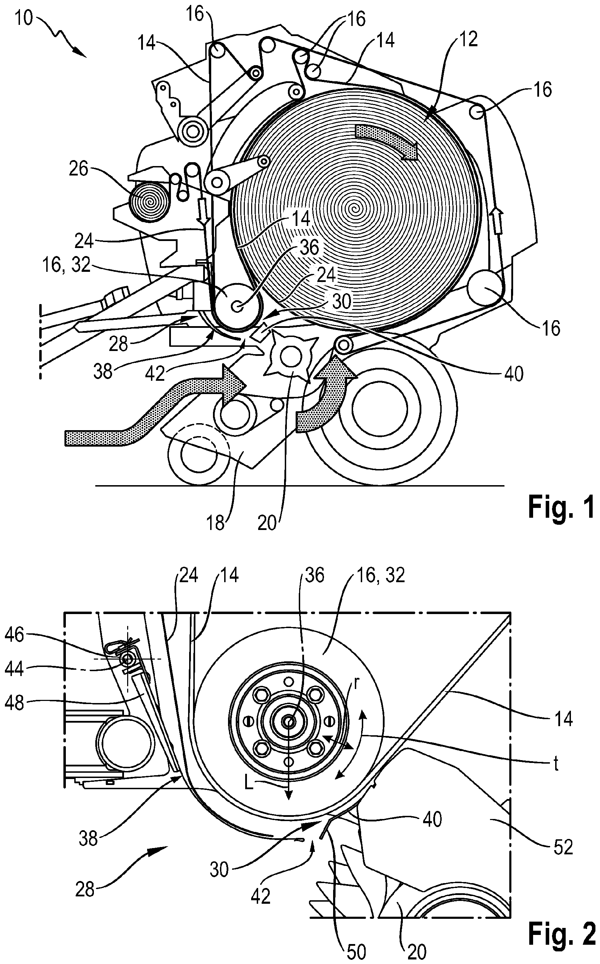

Figur 1 zeigt in einer geschnittenen Seitenansicht eine schematische Darstellung einer Ballenpresse 10. Die Ballenpresse 10 ist in Form einer Rundballenpresse mit einer variablen Presskammer 12 ausgebildet. Die Presskammer 12 wird dabei durch mindestens einen endlosen Pressriemen 14 gebildet, welcher durch eine Vielzahl an Rollen 16 umgelenkt wird. Durch eine Verlagerung von Rollen 16 ist die Größe der Presskammer 12 variierbar. Die Ballenpresse 10 kann ebenso in Form einer sogenannten Festkammerpresse ausgebildet sein, wobei die Presskammer durch eine Vielzahl an Rollen gebildet wird, so dass der pressbare Ballendurchmesser von der Anordnung der Rollen abhängig ist. Im Kontext dieser Erfindung ist unter einer Rolle 16 sowohl eine Rolle 16 mit daran anliegendem Pressriemen 14 als auch eine Rolle 16 ohne daran anliegenden Pressriemen 14 zu verstehen.

Über eine Aufnahmeeinrichtung 18 wird Erntegut aufgenommen, an einem Drehelement in Form eines Rotors 20 entlang geleitet, wobei das Erntegut zerkleinert werden kann, und in die Presskammer 12 eingeleitet, wo das Erntegut verdichtet und zu einem Rundballen 22 gepresst wird. Das Erntegut wird an einer Unterseite des Rotors 20 zur Presskammer 12 geleitet. Der Rotor 20 kann dabei in die Presskammer 12 hineinragen und mit einem, beispielsweise im Uhrzeigersinn drehenden Rundballen 22, in Kontakt sein und mit diesem mitdrehen.

Ein fertig gepresster Rundballen 22 wird üblicherweise vor einem Auswerfen aus der Presskammer 12 mit einem Wickelmaterial 24, beispielsweise einem Garn oder einem Netz, umwickelt, um den Rundballen 22 zu stabilisieren. Das Wickelmaterial 24, welches auf einer Wickelmaterialrolle 26 vorgehalten wird, wird dabei mittels einer Zuführeinheit 28 durch einen Zuführspalt 30 in die Presskammer 12 zugeführt. Der Zuführspalt 30 ist an einer ersten Rolle 32 angeordnet und kann beispielsweise durch die erste Rolle 32 und ein Drehelement, wie den Rotor 20, begrenzt werden. Die erste Rolle 32 ist dabei um eine Drehachse 36 drehbar gelagert und wirkt als Umlenkrolle für den Pressriemen 14, welcher durch die erste Rolle 32 in die Presskammer 12 umgelenkt wird, um den Rundballen 22 zu kontaktieren. Eine Größe des Einführspaltes 30 kann beispielsweise entlang einer Geraden durch die Drehachsen der ersten Rolle 32 und des ebenfalls an den Einführspalt 30 angrenzenden Drehelementes in Form des Rotors 20 bestimmt werden. Die Zuführeinheit 28 ist presskammeraußenseitig außerhalb des Zuführspaltes 30 und benachbart zu der ersten Rolle 32 angeordnet. Bei der gezeigten Ballenpresse 10 erfolgt aufgrund der Drehrichtung des Rundballens 22 und damit des Rotors 20 im Uhrzeigersinn keine Förderung des Erntegutes durch den Zuführspalt 30, wodurch eine Verunreinigung insbesondere der Zuführeinheit 28 durch Erntegut und weiteres unerwünschtes Material reduziert werden kann.

Gemäß der Erfindung weist die Zuführeinheit 28 eine erste Leitvorrichtung 38 auf, welche außenseitig der Presskammer 12 außerhalb des Zuführspaltes 30 an der ersten Rolle 32 angeordnet ist. Die erste Leitvorrichtung 38 ist dabei in eine geöffnete Position P1 und/oder eine Zuführposition P2 verlagerbar, wobei die erste Leitvorrichtung 38 in der geöffneten Position P1 beabstandet von der ersten Rolle 32 angeordnet ist. In der Zuführposition P2 ist die erste Leitvorrichtung 38 derart verschwenkt, dass diese zumindest teilweise in Kontakt mit der ersten Rolle 32 ist, wobei zwischen der ersten Leitvorrichtung 38 und der ersten Rolle 32 angeordnetes Wickelmaterial 24 durch die erste Leitvorrichtung 38 gegen die erste Rolle 32 pressbar ist. Unter dem Kontaktieren der ersten Rolle 32 durch die erste Leitvorrichtung 38 ist dabei im Sinne der Erfindung auch ein Kontaktieren eines außenseitig an der ersten Rolle 32 angeordneten Pressriemens 14 sowie ein Kontaktieren des Wickelmaterials 24 zu verstehen. In der Zuführposition P2 wird das durch die erste Leitvorrichtung 38 an die erste Rolle 32 gepresste Wickelmaterial 24 kraftschlüssig bei einer Drehbewegung der ersten Rolle 32 mitgezogen und dem Zuführspalt 30 und der Presskammer 12 zugeführt. Zwischen der ersten Leitvorrichtung 38 und der Presskammer 12 ist eine zweite Leitvorrichtung 40 vorgesehen, welche zumindest teilweise in dem Zuführspalt 30 angeordnet ist. Die zweite Leitvorrichtung 40 ist starr benachbart und beabstandet zu der ersten Rolle 32 angeordnet, um das Wickelmaterial 24 der Presskammer 12 zuzuleiten. Um eine unerwünschte Ansammlung von Material in der Zuführeinheit 28 und insbesondere im Bereich zwischen der ersten und zweiten Leitvorrichtung 38, 40 und der ersten Rolle 32 zu vermeiden, ist zwischen der ersten und er zweiten Leitvorrichtung 38, 40 ein Reinigungsspalt 42 ausgebildet. Der Reinigungsspalt 42 ist dabei presskammerseitig einer Lotrechten L ausgebildet, welche von der Drehachse 36 der ersten Rolle 32 in Wirkrichtung der Schwerkraft zum Boden gerichtet ist.

In Figur 2 ist die erste Leitvorrichtung 38 in der geöffneten Position P1 beabstandet zu der ersten Rolle 32 dargestellt. Das Wickelmaterial 24 ist dabei bewegbar zwischen der ersten Rolle 32, dem Pressriemen 14 und der ersten Leitvorrichtung 38 angeordnet. Die erste Leitvorrichtung 38 ist in Form eines flächigen Bauteils wie einem Blech, beispielsweise aus Metall, ausgebildet, und weist zuführspaltseitig einen Bereich auf, welcher an den Umfang, insbesondere den Krümmungsradius, der ersten Rolle 32 angepasst ist. An einem dem Zuführspalt 30 abgewandten Ende ist die erste Leitvorrichtung 38, insbesondere lösbar, an einem um eine Schwenkachse 44 verschwenkbaren Schwenkprofil 46, beispielsweise in Form eines Rohres, angeordnet. Die erste Leitvorrichtung 38 erstreckt sich entlang der ersten Rolle 32, insbesondere entsprechend einer Breite des Wickelmaterials 24. An dem Schwenkprofil 46 kann ein Aktor (nicht dargestellt) angreifen um eine Schwenkbewegung der Schwenkprofils 46 und der ersten Leitvorrichtung 38 in die geöffnete Position P1 und/oder die Zuführposition P2 zu bewirken. Durch ein Verschwenken um die Schwenkachse ist zumindest ein zuführspaltseitiges und/oder reinigungsspaltseitiges Ende der ersten Leitvorrichtung 38 in tangentialer und/oder radialer Richtung t,r, verlagerbar. Um eine Verformung der ersten Leitvorrichtung 38 insbesondere in der Zuführposition zu verringern, weist diese eine rippenähnliche Struktur 48 auf. Die rippenähnliche Struktur 48 an einer der ersten Rolle 32 abgewandten Seite der ersten Leitvorrichtung 38 angeordnet. Die Struktur 48 kann dabei einstückig mit der ersten Leitvorrichtung 38 ausgebildet oder lösbar an dieser befestigt sein.

In Förderrichtung des Wickelmaterials 24 ist zwischen der ersten Leitvorrichtung 38 und der Presskammer 12 die zweite Leitvorrichtung 40 angeordnet. Die zweite Leitvorrichtung 40 ist in Form eines flächigen Bauteils wie eines Bleches, beispielsweise aus Metall, ausgebildet und zumindest Teilweise in dem Zuführspalt 30 angeordnet. Die zweite Leitvorrichtung 40 ist im Wesentlichen dem Formverlauf und/oder dem radial außenseitigen Krümmungsradius der ersten Rolle 32 angepasst und beabstandet zu der Umfangsfläche der ersten Rolle 32 angeordnet. Die erste und zweite Leitvorrichtungen 38, 40 sind entlang der Drehachse der ersten Rolle 32 ausgebildet. An einem dem Reinigungsspalt 42 und der ersten Leitvorrichtung 38 zugewandten Ende weist die zweite Leitvorrichtung 40 eine Ablenkkante 50 auf, welche beispielsweise einstückig mit der zweiten Leitvorrichtung 40 durch Abkanten herstellbar ist. Die zweite Leitvorrichtung 40 ist in dem dargestellten Ausführungsbeispiel an einem Bauteil 52 der Ballenpresse 10 in Form eines Rotorabstreifers angeordnet.

Der Reinigungsspalt 42 ist zwischen der ersten und der zweiten Leitvorrichtung 38, 40 angeordnet und ist in tangentialer Richtung t und/oder radialer Richtung r ausgebildet. Unter einer Ausbildung des Reinigungsspaltes 42 in tangentialer Richtung t ist dabei ein Abstand zwischen den benachbarten Enden der ersten und zweiten Leitvorrichtung 38, 40 in einer Richtung tangential zum Umfang der ersten Rolle 32 zu verstehen. Eine Ausbildung des Reinigungsspaltes 42 in radialer Richtung r bedeutet, dass die erste oder zweite Leitvorrichtung 38, 40 in radialer Richtung r, also beabstandet zu der Umfangsfläche der ersten Rolle 32, unterschiedlich angeordnet sind. Der in Figur 2 dargestellte Reinigungsspalt 42 ist sowohl in tangentialer Richtung t als auch in radialer Richtung r ausgebildet, wobei die erste Leitvorrichtung 38 in radialer Richtung r außenseitig der zweiten Leitvorrichtung 40 angeordnet ist. Die erste Leitvorrichtung 38 weist also einen größeren Abstand zu der ersten Rolle 32 in radialer Richtung r auf als die zweite Leitvorrichtung 40.

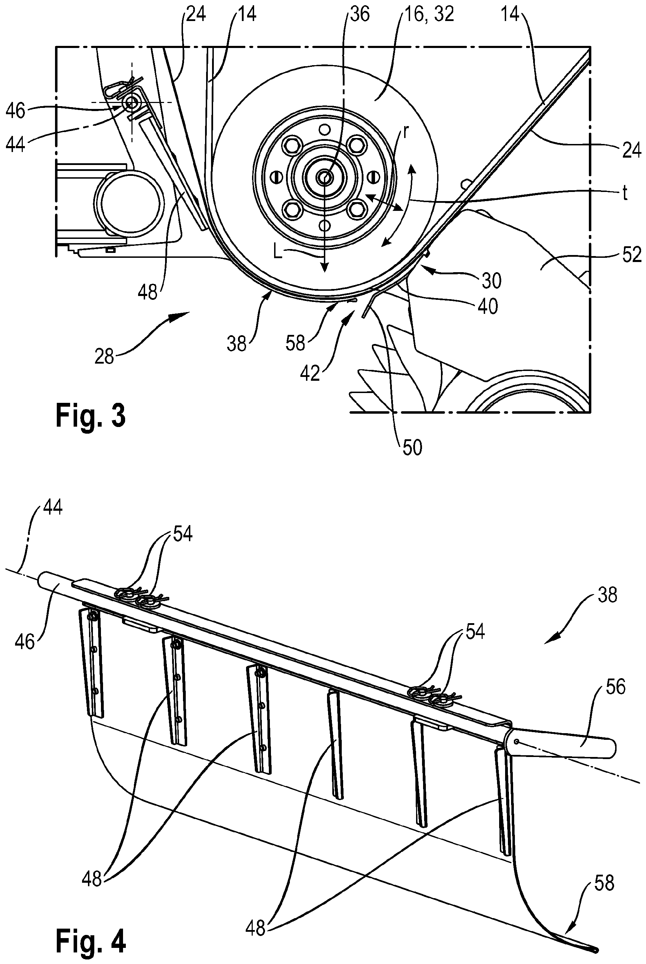

In Figur 3 ist die Zuführeinheit 28 nach einem Verschwenken der ersten Leitvorrichtung 38 in die Zuführposition P2 dargestellt. Die erste Leitvorrichtung 38 ist dabei zumindest teilweise derart gegen die erste Rolle 32 gepresst, dass ein zwischen der ersten Leitvorrichtung 38 und der ersten Rolle 32 und/oder dem Pressriemen 14 angeordnetes Wickelmaterial 24 durch die Drehbewegung der ersten Rolle 32 mitgezogen wird. Dadurch wirken in der Zuführposition P2 die erste Leitvorrichtung 38 und die erste Rolle 32 zusammen, um das Wickelmaterial 24 durch den Zuführspalt 30 in die Presskammer 12 zu fördern. Das Wickelmaterial 24 wird durch die Überlappung des ersten und zweiten Leitelementes 38, 40 in tangentialer Richtung t an dem Reinigungsspalt 42 zuverlässig von der ersten zur zweiten Leitvorrichtung 38, 40 weitergeleitet. Die zweite Leitvorrichtung 40 ist nicht in Anlage mit der ersten Rolle 32, wodurch das Wickelmaterial 24 radial außenseitig durch die zweite Leitvorrichtung 24 leitbar, aber nicht förderbar ist. Die in der Zuführposition P2 beschriebene Verschwenkung der ersten Leitvorrichtung 38 gegen die erste Rolle 32 gilt sowohl für eine erste Rolle 32 mit einem daran anliegenden Pressriemen 14 bei einer variablen Presskammer 12 als auch bei einer ersten Rolle 32 einer Festkammerpresse ohne Pressriemen 14. Die erste Leitvorrichtung 38 ist in der dargestellten Zuführposition P2 radial innenseitig der zweiten Leitvorrichtung 40 angeordnet, wobei die zweite Leitvorrichtung 40 beabstandet zu der ersten Rolle 32 und/oder dem Pressriemen 14 angeordnet ist, wodurch der Reinigungsspalt 42 zumindest in radialer Richtung r ausgebildet wird. Dadurch kann durch die erste Rolle 32, den Pressriemen 14 und/oder durch das Wickelmaterial 24 mitgefördertes Material wie Dreck oder Steine,, welches in der Zuführposition P1 an die erste Rolle 32 gepresst wird, an der zweiten Leitvorrichtung 40 gelöst und durch den Reinigungsspalt 42, beispielsweise unter Wirkung der Gewichtskraft, in die Umgebung abgeführt werden.

Die erste Leitvorrichtung 38 (Fig. 4) ist flächig in Form eines gewölbten Bleches ausgebildet und weist zur Erhöhung der Steifigkeit mehrere rippenartige Strukturen 48 auf, welche an einem schwenkachsenseitigen Ende der ersten Leitvorrichtung 38 auf einer der ersten Rolle 32 abgewandten Seite angeordnet sind. Die erste Leitvorrichtung 38 ist lösbar mit dem Schwenkprofil 46, beispielsweise durch eine formschlüssige Steckverbindung, verbunden. Gegen ein Lösen von dem Schwenkprofil 46 ist die Leitvorrichtung 38 dabei durch Sicherungselemente 54 in Form von Splinten gesichert.

Zum Verschwenken der ersten Leitvorrichtung 38 um die Schwenkachse 44 ist an einem Ende des Schwenkprofils 46 ein Hebelarm 56 angeordnet, an welchem beispielsweise ein Aktor (nicht dargestellt) zum Verschwenken angreifen kann. An einem der Schwenkachse 44 gegenüberliegenden Ende weist die erste Leitvorrichtung 38 einen Kontaktbereich 58 auf, welche innenseitig an der Leitvorrichtung 38 angeordnet ist. Durch den Kontaktbereich 56 ist die Größe und Anordnung der Kontaktfläche zwischen erster Leitvorrichtung 38 und der ersten Rolle 32 bzw. Pressriemens 14, insbesondere in der Zuführposition, genauer bestimmbar. Der Kontaktbereich kann so reduziert werden, beispielsweise als Linienkontakt, um den Verschleiß der ersten Leitvorrichtung 38 zu verringern. Der Kontaktbereich 58 kann entlang der Schwenkachse 44 und/oder unter einem Winkel, beispielsweise einem Rechtenwinkel, zu dieser ausgebildet sein. Der Kontaktbereich 58 kann durch eine Profilierung, beispielsweise durch Umformen, eine Verdickung, beispielsweise durch Falzen, und/oder durch aufbringen eines Zusatzmaterials an der ersten Leitvorrichtung 38 ausgebildet werden.

### Bezugszeichenliste

- 10: Ballenpresse
- 12: Presskammer
- 14: Pressriemen
- 16: Rolle
- 18: Aufnahmevorrichtung
- 20: Rotor
- 22: Rundballen
- 24: Wickelmaterial
- 26: Wickelmaterialrolle
- 28: Zuführeinheit
- 30: Zuführspalt
- 32: erste Rolle
- 36: Drehachse
- 38: erste Leitvorrichtung
- 40: zweite Leitvorrichtung
- 42: Reinigungsspalt
- 44: Schwenkachse
- 46: Schwenkprofil
- 48: Struktur
- 50: Ablenkkante
- 52: Bauteil
- 54: Sicherungselement
- 56: Hebelarm
- 58: Kontaktbereich

- P1: geöffnete Position
- P2: Zuführposition
- L: Lotrechte
- t: tangentiale Richtung
- r: radiale Richtung

## Patentansprüche

1. Ballenpresse, mit einer Presskammer (12) zum Pressen von Rundballen (22) aus Erntegut, mindestens einer an eine Drehbewegung des Rundballens (22) gekoppelten ersten Rolle (32), und eine der Presskammer (12) zugeordneten Zuführeinheit (28) zum Zuführen eines Wickelmaterials (24) in die Presskammer (12), wobei das Wickelmaterial (24) durch einen an die erste Rolle (32) angrenzenden Zuführspalt (30) in die Presskammer (12) zuführbar ist, wobei die Zuführeinheit (28) mindestens eine erste Leitvorrichtung (38) aufweist, und wobei die erste Leitvorrichtung (38) außenseitig der Presskammer (12) an dem Zuführspalt (30) angeordnet und in eine Zuführposition (P2) und/oder eine geöffnete Position (P1) verlagerbar ist, **dadurch gekennzeichnet dass** die Zuführeinheit (28) eine zweite Leitvorrichtung (40) aufweist, welche presskammerseitig der ersten Leitvorrichtung (38) derart angeordnet ist, dass zumindest in der geöffneten Position (P1) zwischen der ersten und der zweiten Leitvorrichtung (38, 40) ein Reinigungsspalt (42) ausgebildet ist.

2. Ballenpresse nach Anspruch 1, **dadurch gekennzeichnet, dass** der Reinigungsspalt (42) zwischen der ersten Leitvorrichtung (38) und der zweiten Leitvorrichtung (40) im Wesentlichen in einem, insbesondere presskammerseitigen, Bereich einer Lotrechten (L) der Drehachse (36) der ersten Rolle (32) ausgebildet ist.

3. Ballenpresse nach einem der Ansprüche 1 oder 2, **dadurch gekennzeichnet, dass** in der geöffneten Position (P1) und/oder der Zuführposition (P2) der Reinigungsspalt (42) durch einen tangentialen Abstand (t) und/oder einen radialen Abstand (r) der ersten und zweiten Leitvorrichtung (38, 40) zueinander ausgebildet ist.

4. Ballenpresse nach einem der vorherigen Ansprüche, **dadurch gekennzeichnet, dass** in der Zuführposition (P2) die erste Leitvorrichtung (38) und die zweite Leitvorrichtung (40) zumindest teilweise in tangentialer Richtung (t) überlappend angeordnet sind.

5. Ballenpresse nach einem der vorherigen Ansprüche, **dadurch gekennzeichnet, dass** die erste Leitvorrichtung (38) durch ein Verschwenken um eine Schwenkachse (44) in die Zuführposition (P2) und/oder geöffnete Position (P1) verlagerbar ist.

6. Ballenpresse nach einem der vorherigen Ansprüche, **dadurch gekennzeichnet, dass** die erste Leitvorrichtung (38) rollenseitig mindestens einen Kontaktbereich (58) aufweist, welcher zum Kontaktieren der ersten Rolle (32) und/oder zum Anpressen des Wickelmaterials (24) gegen die erste Rolle (32) in der Zuführposition (P2) ausgebildet ist.

7. Ballenpresse nach einem der vorherigen Ansprüche, **dadurch gekennzeichnet, dass** die erste Leitvorrichtung (38) und die zweite Leitvorrichtung (40) entlang eines Teilumfangs der ersten Rolle (32) angeordnet sind, wobei die erste Leitvorrichtung (38) in Form eines im Wesentlichen flächigen Bauteils ausgebildet ist, welches zumindest in einem Teilbereich dem Formverlauf der ersten Rolle (32) angepasst ist.

8. Ballenpresse nach einem der vorherigen Ansprüche, **dadurch gekennzeichnet, dass** die zweite Leitvorrichtung (40) zumindest teilweise innerhalb des Zuführspaltes (30) angeordnet ist.

9. Ballenpresse nach einem der vorherigen Ansprüche, **dadurch gekennzeichnet, dass** die zweite Leitvorrichtung (40) an einem der ersten Leitvorrichtung (38) zugewandten Ende eine Ablenkkante (50) aufweist.

## Claims

1. Baling press with a bale chamber (12) for compressing round bales (22) of harvested material, at least one first roller (32) coupled to a rotational movement of the round bale (22), and a feed unit (28) allocated to the bale chamber (12) for feeding a wrapping material (24) into the bale chamber (12), wherein the wrapping material (24) can be fed into the bale chamber (12) through a feed gap (30) adjacent to the first roller (32), wherein the feed unit (28) has at least one first guide device (38), and wherein the first guide device (38) is arranged on the outside of the bale chamber (12) at the feed gap (30) and can be moved into a feed position (P2) and/or an opened position (P1), **characterized in that** the feed unit (28) has a second guide device (40), which is arranged on the bale-chamber side of the first guide device (38) in such a way that a cleaning gap (42) is formed at least in the opened position (P1) between the first and the second guide device (38, 40).

2. Baling press according to claim 1, **characterized in that** the cleaning gap (42) is formed between the first guide device (38) and the second guide device (40) substantially in an area, in particular on the bale-chamber side, of a vertical line (L) from the axis of rotation (36) of the first roller (32).

3. Baling press according to one of claims 1 or 2, **characterized in that** in the opened position (P1) and/or the feed position (P2) the cleaning gap (42) is formed by a tangential spacing (t) and/or a radial spacing (r) of the first and second guide devices (38, 40) from each other.

4. Baling press according to one of the preceding claims, **characterized in that** in the feed position (P2) the first guide device (38) and the second guide device (40) are arranged overlapping at least partially in the tangential direction (t).

5. Baling press according to one of the preceding claims, **characterized in that** the first guide device (38) can be moved into the feed position (P2) and/or the opened position (P1) by a pivoting about a pivot axis (44).

6. Baling press according to one of the preceding claims, **characterized in that** on the roller side the first guide device (38) has at least one contact area (58), which is formed for contact with the first roller (32) and/or for pressing the wrapping material (24) against the first roller (32) in the feed position (P2).

7. Baling press according to one of the preceding claims, **characterized in that** the first guide device (38) and the second guide device (40) are arranged along a partial circumference of the first roller (32), wherein the first guide device (38) is formed as a substantially flat component, which is adapted to the shape of the first roller (32) at least in a partial area.

8. Baling press according to one of the preceding claims, **characterized in that** the second guide device (40) is arranged at least partially inside the feed gap (30).

9. Baling press according to one of the preceding claims, **characterized in that** the second guide device (40) has a deflection edge (50) at an end facing the first guide device (38).

## Revendications

1. Presse à balles comprenant une chambre de pressage (12) pour presser des balles rondes (22) à partir de produit récolté, comprenant au moins un premier rouleau (32) couplé à un mouvement tournant des balles rondes (22) et comprenant une unité d'amenée (28) associée à la chambre de pressage (12) pour amener un matériau d'enrubannage (24) dans la chambre de pressage (12), le matériau d'enrubannage (24) pouvant être amené dans la chambre de pressage (12) par l'intermédiaire d'un interstice d'amenée (30) adjacent au premier rouleau (32), l'unité d'amenée (28) comportant au moins un premier dispositif directionnel (38), et le premier dispositif directionnel (38) étant disposé à l'extérieur de la chambre de pressage (12) au niveau de l'interstice d'amenée (30) et pouvant être déplacé dans une position d'amenée (P2) et/ou dans une position ouverte (P1), **caractérisée en ce que** l'unité d'amenée (28) comporte un second dispositif directionnel (40) qui est disposé côté chambre de pressage du premier dispositif directionnel (38), de façon qu'au moins dans la position ouverte (P1) un interstice de nettoyage (42) soit ménagé entre le premier et le second dispositif directionnel (38, 40).

2. Presse à balles selon la revendication 1, **caractérisée en ce que** l'interstice de nettoyage (42) est ménagé entre le premier dispositif directionnel (38) et le second dispositif directionnel (40) sensiblement dans une zone, en particulier côté chambre de pressage, d'une verticale (L) de l'axe de rotation (36) du premier rouleau (32).

3. Presse à balles selon une des revendications 1 ou 2, **caractérisée en ce que**, dans la position ouverte (P1) et/ou la position d'amenée (P2), l'interstice de nettoyage (42) est formé par un écartement tangentiel (t) et/ou par un écartement radial (r) des premier et second dispositifs directionnels (38, 40) l'un par rapport à l'autre.

4. Presse à balles selon une des revendications précédentes, **caractérisée en ce que**, dans la position d'amenée (P2), le premier dispositif directionnel (38) et le second dispositif directionnel (40) sont disposés au moins en partie de manière chevauchante dans la direction tangentielle (t).

5. Presse à balles selon une des revendications précédentes, **caractérisée en ce que** le premier dispositif directionnel (38) peut être déplacé dans la position d'amenée (P2) et/ou dans la position ouverte (P1) par pivotement autour d'un axe de pivotement (44).

6. Presse à balles selon une des revendications précédentes, **caractérisée en ce que** le premier dispositif directionnel (38) comporte, côté rouleaux, au moins une zone de contact (58) qui est conçue pour contacter le premier rouleau (32) et/ou pour plaquer le matériau d'enrubannage (24) contre le premier rouleau (32) dans la position d'amenée (P2).

7. Presse à balles selon une des revendications précédentes, **caractérisée en ce que** le premier dispositif directionnel (38) et le second dispositif directionnel (40) sont disposés le long d'une périphérie partielle du premier rouleau (32), le premier dispositif directionnel (38) étant conçu sous la forme d'un élément structurel sensiblement plat qui, au moins dans une zone partielle, épouse le tracé de la forme du premier rouleau (32).

8. Presse à balles selon une des revendications précédentes, **caractérisée en ce que** le second dispositif directionnel (40) est disposé au moins en partie à l'intérieur de l'interstice d'amenée (30) .

9. Presse à balles selon une des revendications précédentes, **caractérisée en ce que** le second dispositif directionnel (40) comporte, à une extrémité tournée vers le premier dispositif directionnel (38), un bord déflecteur (50).
